# EUROPEAN PATENT SPECIFICATION

(11) **EP 1 899 244 B1**
(45) Date of publication and mention of the grant of the patent: **29.04.2009**
(21) Application number: 06733573.7
(22) Date of filing: 18.04.2006
(51) Int. Cl.: B65G 21/14

(54) **BELT CONVEYER, ESPECIALLY FOR TRANSPORTING FIREWOOD FROM A FIREWOOD SPLITTING MACHINE**
BANDFÖRDERER, INSBESONDERE ZUM TRANSPORT VON BRENNHOLZ AUS EINER BRENNHOLZSPALTMASCHINE
CONVOYEUR A BANDE POUR LE TRANSPORT DE BOIS DE CHAUFFAGE FOURNI PAR UNE MACHINE A REFENDRE

(30) Priority: 31.05.2005 SI 200500161
(43) Date of publication of application: 19.03.2008
(73) Proprietor: Tajfun Planina Proizvodnja Strojev, D.o.o., 3225 Planina Pri Sevnici (SI)
(72) Inventor: SPAN, Iztok, 1000 Ljubljana (SI)
(74) Representative: Borstar, Dusan
(86) International application number: PCT/SI2006/000016
(87) International publication number: WO 2006/130121

(56) References cited:
- AT-B- 297 583
- GB-A- 2 136 753
- US-A- 3 596 785
- US-A- 5 090 550
- US-A- 5 351 809
- US-A- 5 498 119
- US-B1- 6 543 622

## Description

Invention belongs to transporting devices intended for loading and unloading, and in particular for feeding or conveying of material or items in connection with supplying thereof to working or manufacturing processes, where such devices are especially adapted for quickly setting-up or removing. At the same time the invention may also relate to transport systems, which are adapted to firewood cutting or splitting machines.

The purpose of the invention is to create such belt conveyer, which could be on the one hand quickly and easily set-up in order to enable transporting of material items and on the other hand quickly and easily collapsed to the smallest possible length and height in order to be transported or displaced from one working place to another by means of ordinary forestry machinery, and moreover, in the absence of infrastructure e.g. in the forest or anywhere on the spot such conveyer should be able to operate exclusively by means of said forestry machinery, preferably thanks to driving units, which are normally available on a tractor.

Several collapsible or telescopic expandable belt conveyers or conveying belts are already known in the prior art.

A device for loading and unloading objects is proposed in US 3,596,785, which includes a conveying unit equipped with a continuous conveyer belt. Said conveying unit is extensible and retractable by means of telescoping horizontal extension guides and a telescopic cylinder. The belt is tensioned and guided by means of plurality of guiding and tensioning pulleys, which are available within said conveying unit and which may be displaced in order to enable each desired effective length of the belt depending on each particular state of extension or retraction of the conveying unit. When guided among said plurality of pulleys, the belt is unavoidable bent in both directions, which leads to decreasing of reliability and normally results in a relatively short lifetime of the belt. At least heavy-duty belts namely consist of a plurality of layers, which are arranged in appropriate manner in order to assure both each required friction and also a required bearing capacity, Due to said arrangement of layers, the belt is then normally able to withstand bending in a single direction only and not also in the opposite direction.

One of such conveyers is described in US 4,925,009 and consists of several successively arranged independent belt conveying units. In each of said units the conveying belt is tensioned between a driving roller and tensioning roller, while said tensioning roller also serves for driving of a reversible section of the belt, which means the section, which is not intended for transporting. Each of said units is equipped with a driving means, which is normally an electric motor. Said conveyer may be quickly collapsed, however only to several smaller units, which from the point of view of an average user cannot be further disassembled. Consequently, each of these units per se may still be relatively bulky, so that transporting thereof may lead to problems. Accordingly, said conveyer is not appropriate choice for operation in situ.

A further conveyer is described in US 5,096,045, which consists of several units, which are equipped with numerous rollers, over which the conveying belt is tensioned. Said units are mutually assembled, and several of them include longitudinal guides in form of C-profile, while the intermediate units consist of rectangular tubes, which are inserted between neighboring units, which consist of C-profiles. Such conveyer may be set-up on the flat ground surface and must be adjusted into a desired level after assembling. An electric motor normally serves as a driving unit. It is therefore obvious, that such conveyer may either be assembled or disassembled, where its setting-up or removing requires a lot of time. In addition to that, said conveyer includes numerous heavy rollers and is therefore pretty heavy and quite inappropriate e.g. for use in situ, where neither the ground is capable to take-over such loadings, nor the electricity source is available, which normally occurs e.g. by cutting or splitting of firewood or also by performing other forestry activities in situ, e.g. in the forest.

Still further, JP 09295712A describes a conveyer, which comprises a supporting construction with legs, which are displaceable in a vertical direction and fixed by means of appropriate bolts and bores in each desired position, and by which a frame is supported, which consists of C-profiles, which are faced away from each other and between which guiding and driving rollers are available, over which the conveying belt is tensioned. Although such conveyer may be displaced from one place to another and pivoted under a desired angle when bearing in mind position of the conveying belt with respect to the ground, disassembling thereof seems not to be foreseen. When assuming, that such conveyer might be transported thanks to the own chassis to each desired locations, such chassis then needs to be sufficiently rigid and therefore relatively bulky. Although such conveyer would be available e.g. in form of a trailer and towed by appropriate tractor, such transporting thereof would then exclude a possibility of simultaneously transporting of any other forestry equipment like cutters, firewood splitter, cargo trailer or the like.

A belt conveyer is proposed according to the invention, which is intended especially for transporting firewood from a firewood splitting machine and comprises at least a driving unit, which is equipped with a driving roller and a driving means and is arranged at the one end area thereof, and furthermore a guiding unit, which is arranged on the opposite end area and equipped with a guiding roller, which is adapted for guiding and tensioning of a conveying belt, which extends over and around said rollers. Said driving unit and said guiding unit and when desired also at least one intermediate unit together form a telescopic self-supporting construction, which is expandable or collapsible in its longitudinal direction by means of a driving cylinder, which is connected at least with the driving unit and with the guiding unit, wherein the driving roller of the driving unit is powered by means of a hydraulic driving means.

Said driving unit includes two lateral elements, each of them consisting of a bent plate said bent plate including a longitudinal telescopic guide essentially in form of C-profile as well as a horizontal guide for guiding a conveying belt and also a lateral guide.

A preferable embodiment of the invention comprises at least one intermediate unit, which is adapted for co-operation with said driving unit and includes two lateral elements, each of them comprising a longitudinal telescopic guide essentially in form of C-profile, which is inserted into a corresponding guide of the driving unit and consequently displaceable along thereof, and furthermore a horizontal guide, which forms a longitudinal extension of the corresponding guide of the driving unit, as well as a lateral guide, which also forms a longitudinal extension of the corresponding guide of the driving unit.

The guiding unit includes two lateral elements, each of them consisting of a bent plate, said bent plate including a longitudinal telescopic guide essentially in form of C-profile, which is intended for guiding a conveying belt and is inserted into a corresponding guide of each adjacent intermediate unit and consequently displaceable along thereof, and furthermore a horizontal guide, which forms a longitudinal extension of the corresponding guide of each neighboring intermediate unit, as well as a lateral guide, which also forms a longitudinal extension of the belonging guide of each neighboring intermediate unit.

One of further possible embodiments of the invention proposes more than one intermediate unit to be foreseen between the driving unit and the guiding unit, by which - when observed in a direction from the driving unit towards the guiding unit - each subsequent intermediate unit is adapted for co-operation with each preceding intermediate unit and includes two lateral elements, each of them comprising a longitudinal telescopic guide essentially in form of C-profile, which is inserted into a corresponding guide of each preceding intermediate unit and is then consequently displaceable along thereof, and in addition to that a horizontal guide, which forms a longitudinal extension of the corresponding guide of each preceding intermediate unit, as well as a lateral guide, which also forms a longitudinal extension of the corresponding guide of each preceding intermediate unit.

In a still further embodiment of the invention the guiding unit is attached directly to the driving unit and includes two lateral elements, each of them comprising a longitudinal telescopic guide essentially in form of C-profile, which is intended for guiding of a conveying belt and is inserted into a corresponding guide of the driving unit and is consequently displaceable along thereof, and furthermore a horizontal guide, which forms a longitudinal extension of the corresponding guide of the driving unit, and still further a lateral guide, which also forms a longitudinal extension of the belonging guide of the driving unit.

Said driving unit is equipped with a driving cylinder, which includes a shaft, which is attached at least to the guiding unit and displaceable in the longitudinal direction of the conveyer, while in an alternative embodiment said driving cylinder is attached to the guiding unit, while the its shaft is connected with the driving unit.

In a further embodiment of the invention the driving unit is equipped with a driving cylinder, which includes several telescopic shaft sections, which are expandable in the longitudinal direction of the conveyer, by which the outmost expandable shaft section is connected with the guiding unit. In an alternative embodiment of the invention said guiding unit is equipped with a driving cylinder, which includes several telescopic shaft sections, which are expandable in the longitudinal direction of the conveyer, by which the outmost expandable shaft section is connected with the driving unit.

In a preferred embodiment of the invention the driving unit is equipped with a driving cylinder, which includes several telescopic shaft sections, which are expandable in the longitudinal direction of the conveyer and each of them is connected with one intermediate unit or a guiding unit, so that the shortest expandable shaft section is connected with the intermediate unit, which is placed adjacent to the driving unit, and the outmost expandable shaft section is connected with the driving unit.

An embodiment is also foreseen, where the driving unit is supported by means of a driving cylinder, which includes several telescopic shaft sections, which are expandable in the longitudinal direction of the conveyer, and is connected with the shortest expanded shaft section, while the other shaft sections are successively attached to intermediate units proportionally with respect to the length of expansion thereof, and the outmost expandable shaft section is attached to the guiding unit of the conveyer.

Said driving cylinder is preferably available as a hydraulic cylinder, while the driving means is preferably a hydraulic motor.

Now the invention will be described in more detail on the basis of an embodiment and the attached drawing, wherein
- Fig. 1: is a perspective view of a collapsed non-operating conveyer during displacement thereof;
- Fig. 2: is a partial explosion view of a conveyer according to Fig. 1;
- Fig. 3: is a perspective view of a conveyer according to Fig. 1 and 2 during operation;
- Fig. 4: is a perspective view of a conveyer according to Fig. 3;
- Fig. 5: is a side view of a conveyer according to Fig. 3;

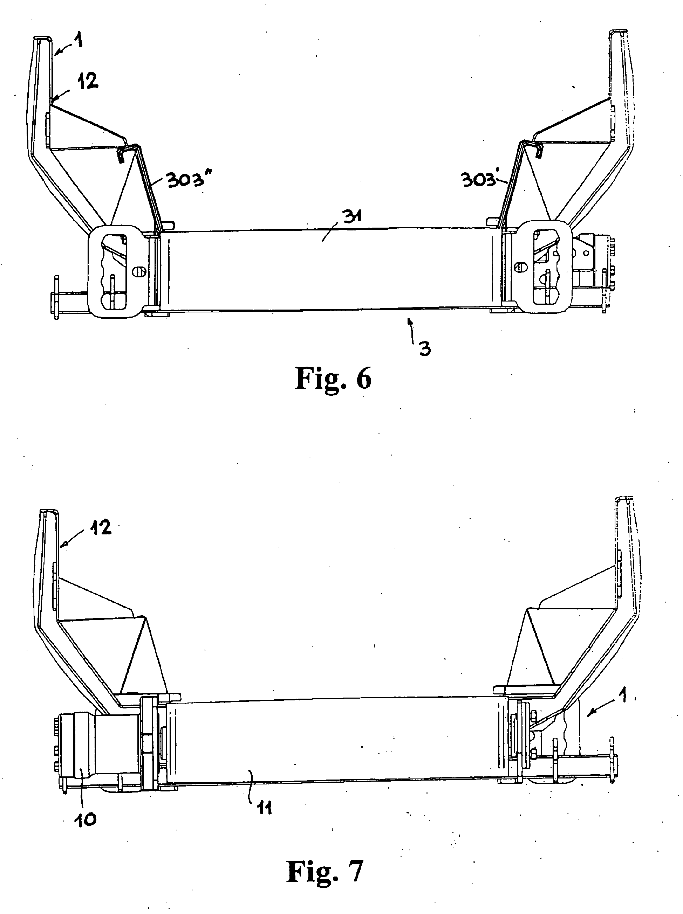

- Fig. 6: is a front view of a conveyer according to Fig. 3;
- Fig. 7: is a rear view of a conveyer according to Fig. 3;

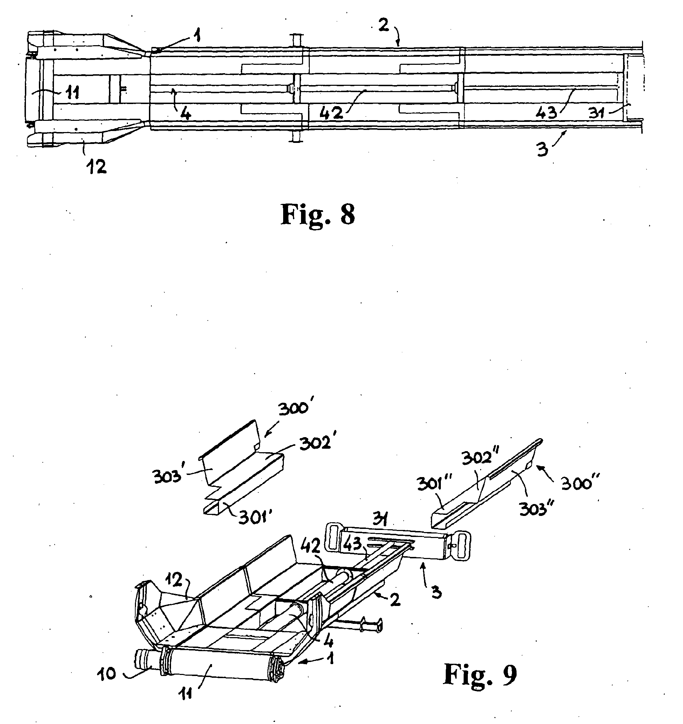

- Fig. 8: is a top view of a conveyer according to Fig. 3; and
- Fig. 9: is a partial explosion view of a conveyer according to Fig. 3.

Conveyer according to invention consists of telescopic self-supporting units 1, 2, 3, which are aligned each to other in a longitudinal direction and displaceable in respect of each other during expanding or collapsing the conveyer, where the first end unit 1 is a driving unit, which includes adequate driving roller 11, which is driven by means of appropriate driving means 10, while the other end unit 3 is a guiding unit, which includes a guiding roller 31, and wherein each of said units 1, 2, 3 may be displaced in the longitudinal direction by means of a cylinder 4, especially by means of a telescopic cylinder.

The shown embodiment consists of three units 1, 2, 3, namely of a driving unit 1, of an intermediate unit 2 as well as of a guiding or tensioning unit 3, which all consist of relatively thin steel plates, which are bent in appropriate manner in order to form a light and sufficiently rigid self-supporting telescopic structure as well as to enable guiding and supporting of a not-shown conveying belt, which extends between the driving roller 11 and the guiding roller 31, together with transported items loaded thereon.

Those skilled in the art should understand, that whenever desired also more than one intermediate unit 2 may be included between the units 1 and 2.

In order to ensure appropriate visibility, the conveying belt is removed i.e. not shown in the attached drawing. The belt may be designed as a generally used single- or multi layered, integral or perforated, grid- or otherwise shaped, flat or with ribs equipped flexible endless belt, which consists of metallic or non-metallic materials and which is commercially available and used in any other known embodiment of conveyers.

The shown embodiment of a driving unit 1 comprises a funnel-shaped inlet portion 12, which also consists of a thin metallic plate and is intended for guiding of transported items towards the conveying belt. The driving roller 11, which is available in the area of said inlet portion 12, is driven by means of a driving means 10, which is a hydraulic motor, which is included into appropriate hydraulic circuit of a tractor or similar working machine as used in field of forestry. Said driving unit 1 further comprises two guiding lateral elements 100', 100" which consist of appropriately bent metallic plates and each of them includes a longitudinal telescopic guide 101', 101" in form of C-profile, a horizontal guide 102', 102" for guiding of conveying belt, and also a lateral guide 103', 103". Said lateral elements 100', 100" of the driving unit 1 are mutually interconnected in the central area, especially by means of screws, and may generally be disassembled.

The intermediate unit 2, which is adapted for co-operation with said driving unit 1, also consists of two lateral guiding elements 200', 200', each of them includes a telescopic guide 201', 201" in form of C-profile, which is inserted into said telescopic guide 100', 100" of the driving unit 1 and may then be moved alongside thereof, as well as a horizontal guide 202', 202", which represents a longitudinal extension of the corresponding guide 102', 102" of the driving unit 1, and also the lateral guide 203', 203", which quite analogously also represents a longitudinal extension of the belonging guide 103', 103" of the driving unit 1.

When the number of intermediate units 2 is greater than one, then each subsequent intermediate unit 2 is adapted for co-operation with each preceding intermediate unit 2, when observed in a direction away from the driving unit 1, by which each subsequent unit 2 consists of two lateral guiding elements 200', 200", where each of them comprises on the one hand a telescopic guide 201', 201" in form of C-profile, which is inserted into corresponding telescopic guide 201', 201 " of each preceding intermediate unit 2 and is then movable alongside thereof, and on the other hand a horizontal guide 202', 202", which forms an extension of each corresponding horizontal guide 202', 202" of the preceding intermediate unit 2, and also a lateral guide 203', 203", which quite analogous represents appropriate extension of each corresponding lateral guide 203', 203" of the preceding intermediate unit 2 in its longitudinal direction.

As previously mentioned, the guiding unit 3 comprises a freely rotating guiding roller 31 and is moreover adapted to co-operate with each adjacent - when observed in a direction away from the driving unit 1 - intermediate unit 2. Accordingly, said guiding unit 3 consists of two lateral guiding elements 300', 300", where each of them comprises on the one hand a telescopic guide 301', 301" in form of C-profile, which is inserted into corresponding telescopic guide 201', 201" of each preceding intermediate unit 2 and is then movable alongside thereof, and on the other hand a horizontal guide 302', 302", which forms an extension of each corresponding horizontal guide 202', 202" of the preceding intermediate unit 2, and also a lateral guide 303', 303", which quite analogous represents appropriate extension of each corresponding lateral guide 203', 203" of the preceding intermediate unit 2 in its longitudinal direction.

Generally also the embodiment is feasible, which consists exclusively of a driving unit 1 and a guiding unit 3 without any intermediate unit 2. In such embodiment the driving unit 1 may e.g. completely correspond to those previously described, while the guiding unit 3 needs to be adapted for co-operation directly with said driving unit 1 and not e.g. for co-operation with corresponding intermediate unit 2.

As already mentioned, the conveyer also comprises a driving cylinder 4, which is generally connected at least with said driving unit 1 and said guiding unit 3 in such a way, that said units are longitudinally displaced either towards each other or away from each other, by which then indirectly also the intermediate units 2, when available, are simultaneously displaced. Said cylinder 4 may be mounted either on the driving unit 1 or may also e.g. said driving unit 1 be connected with the shaft 41 of the cylinder 4. In such case, when also the driving unit 1 is supported in appropriate manner, said driving unit 1 and consequently also the intermediate units 2 and the guiding unit 3, which practically means the complete conveyer, may be pivoted in a desired manner by means of said cylinder 4.

In a preferred embodiment said cylinder 4 is a telescopic cylinder, which is attached to the driving unit 1, while the belonging shaft 41 is connected to the guiding unit 3 of the conveyer.

In the most preferable embodiment, which is also disclosed in the drawing, said cylinder 4 is a multistage i.e. a multi-stroke cylinder, which comprises several shaft sections 41, 42, 43, which are inserted each to other, and each of them is then connected with each belonging intermediate unit 2 or the driving unit 3. As soon as an appropriate hydraulic circuit is established, any displacement of said units 1, 2, 3, which are mutually interconnected in a telescopic manner, is then completely controlled either by moving towards each to other or also away from each other.

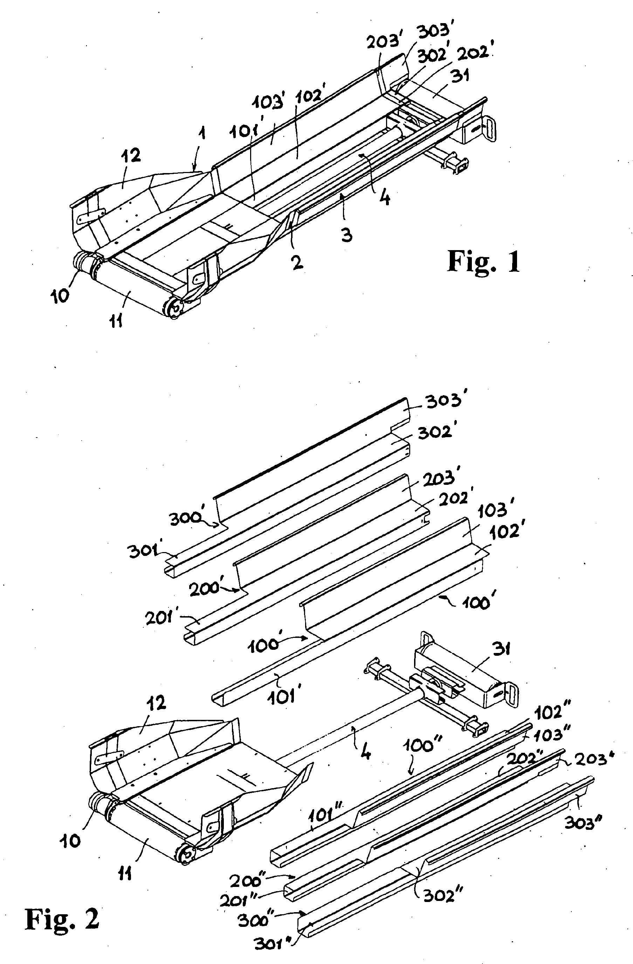

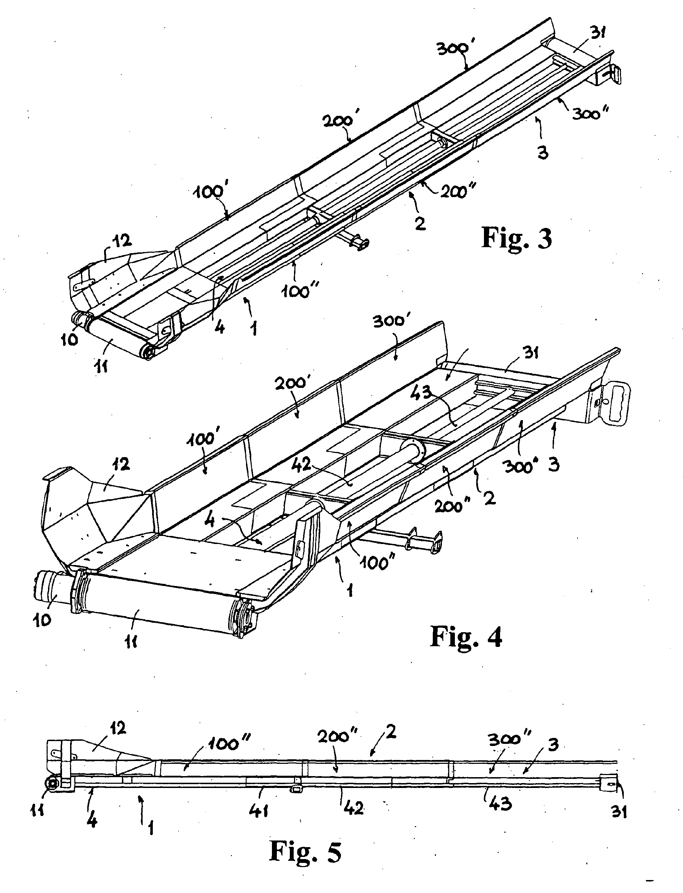

Said conveyer is shown in Fig. 1 in its collapsed state prior to expansion thereof, wherein the belonging conveying belt, which regularly extends over and around the driving roller 11 and the guiding roller 31, is not shown, since it may be folded and stored in appropriate manner, whenever the conveyer is not operating. Upon activating of the cylinder 4 the shaft section 42 (Fig. 4) starts protruding from the cylinder 4, and consequently the intermediate unit 2 together with the guiding unit 3 is displaced away from the driving unit 1 and along thereof. Upon that the shaft section 43 starts protruding from the previously mentioned shaft section 42, through which in this particular embodiment with a single intermediate unit 2 the conveying belt is properly tensioned and rest onto guides 102', 102"; 202', 202"; 302', 302" on said units 1, 2, 3 as well as around the driving roller 11 and the guiding roller 31 (Figs. 3 to 5). In such a way the conveyer is quickly and easily expanded to its complete operating length. By further activating a corresponding driving means 10, preferably a hydraulic motor, the driving roller 11 starts rotating with a desired velocity, and consequently, the conveying belt starts running and conveyer as a whole starts to operate.

Upon terminating of operation said driving means 10 is stopped, after that the shaft section 43 is returned into the shaft section 42, through which the guiding unit 3 is displaced to a position, in which it is overlapped with each neighboring intermediate unit 2 (or even with the driving unit 1), through which the conveyer is gradually collapsed to such length, which practically corresponds to the length of the driving unit 1 itself.

Accordingly, thanks to such minimized length in its collapsed state and also to its configuration, which requires only a small number of simple and light constituent parts, extremely comfortable to transport and in addition to that, the conveyer is easily and automatically expandable and collapsible and may on such basis be easily used anywhere on the spot, in particularly also by taking into account, that there are no special requirements in respect of power supply, which is required in order to set-up the conveyer and put it into operation.

## Claims

1. Belt conveyer, comprising at least a driving unit (1), which is equipped with a driving roller (11) powered by a driving means (10) and said driving unit (1) being arranged at the one end area of the belt conveyer, said belt conveyer also comprising a guiding unit (3), which is arranged on the opposite end area of the belt conveyer and said guiding unit (3) is equipped with a guiding roller (31) adapted for guiding and tensioning of a conveying belt, which extends over and around said rollers (11, 31), whereby said driving unit (1) together with the guiding unit (3) and when desired also with at least one intermediate unit (2) forms a telescopic self-supporting construction, which is expandable or collapsible in its longitudinal direction by means of a driving cylinder (4), which is connected at least with the driving unit (1) and with the guiding unit (3),
**characterized in that**
the driving unit (1) comprises two lateral elements (100', 100"), each of them consisting of a bent plate, said bent plate including a longitudinal telescopic guide (101', 10 1 ") essentially in form of C-profile as well as a horizontal guide (102', 102") for guiding a conveying belt and a lateral guide (103', 103") for guiding a conveying belt,
and that the guiding unit (3) comprises two lateral elements (300', 300"), each of them consisting of a bent plate, said bent plate including a longitudinal telescopic guide (301', 301") essentially in form of C-profile as well as a horizontal guide (302', 302") for guiding a conveying belt and lateral guide (303', 303") for guiding a conveying belt,
and that each intermediate unit (2), which is optionally included between said driving unit (1) and guiding unit (3), also comprises two lateral elements (200', 200"), each of them consisting of a bent plate, said bent plate including a longitudinal telescopic guide (201', 201") essentially in form of C-profile as well as a horizontal guide (202', 202") for guiding a conveying belt and a lateral guide (203', 203") for guiding a conveying belt,
where each longitudinal telescopic guide (301', 301") of the guiding unit (3) is either directly or indirectly via appropriate longitudinal telescopic guide (201', 201') of at least one intermediate unit (2) inserted into each corresponding longitudinal telescopic guide (101', 101") of the driving unit (1), or vice versa,
and where each horizontal guide (302', 302") of the guiding unit (3) forms either directly or via appropriate horizontal guide (202', 202") of at least one intermediate unit (2) an extension of each corresponding horizontal guide (102', 102") of the driving unit (1), or vice versa,
and where each lateral guide (303', 303") of the guiding unit (3) forms either directly or via appropriate lateral guide (203', 203") of at least one intermediate unit (2) an extension of each corresponding lateral guide (103', 103") of the driving unit (1), or vice versa.

2. Belt conveyer according to claim 1, **characterized in that** each longitudinal telescopic guide (301', 301 ") of the guiding unit (3) is inserted directly into each corresponding longitudinal telescopic guide (101', 101") of the driving unit (1) or vice versa, where each horizontal guide (302', 302") of the guiding unit (3) forms an extension of a corresponding horizontal guide (102', 102") of the driving unit (1) or vice versa, and at the same time each lateral guide (303', 303") of the guiding unit (3) forms an extension of a corresponding lateral guide (103', 103") of the driving unit (1) or vice versa.

3. Belt conveyer according to claim 1, **characterized in that** each longitudinal telescopic guide (301', 301") of the guiding unit (3) is inserted into each corresponding longitudinal telescopic guide (201', 201 ") of the intermediate unit (2), and each longitudinal telescopic guide (201', 201 ") of the intermediate unit (2) is then inserted into each corresponding longitudinal telescopic guide (101', 101") of the driving unit (1), wherein each horizontal guide (202', 202") of the intermediate unit (2) forms an extension of a corresponding horizontal guide (102', 102") of the driving unit (1) and each horizontal guide (302', 302") of the guiding unit (3) forms an extension of a corresponding horizontal guide (202', 202") of said intermediate unit (2).

4. Belt conveyer according to claim 1, **characterized in that** the longitudinal telescopic guide (201', 201") of an intermediate unit (2) is inserted into each corresponding longitudinal telescopic guide (301', 301 ") of the guiding unit (3), H and the longitudinal telescopic guide (101', 101") of the driving unit (1) is then inserted into each corresponding longitudinal telescopic guide (201', 201 ") of the intermediate unit (2), wherein each horizontal guide (302', 302") of the guiding unit (3) forms an extension of a corresponding horizontal guide (202', 202") of the intermediate unit (2) and each horizontal guide (102', 102") of the driving unit (1) forms an extension of a corresponding horizontal guide (202', 202") of said intermediate unit (2).

5. Belt conveyer according to Claim 3 or 4, **characterized in that** at least two intermediate units (2) are foreseen, by which each longitudinal telescopic guide (201', 201") of each particular intermediate unit (2) is inserted into the longitudinal telescopic guide (201', 201 ") of each adjacent intermediate unit (2), which is then inserted into a longitudinal telescopic guide (101', 101") of the driving unit (1) or when appropriate into a longitudinal telescopic guide (301', 301 ") of the guiding unit (3), wherein each horizontal guide (202', 202") of each adjacent intermediate unit (2) forms an extension of each corresponding horizontal guide (202', 202") of each observed intermediate unit (2), which then forms an extension of each corresponding horizontal guide (102', 102") of the driving unit (1) or when appropriate an extension of each corresponding horizontal guide (302', 302") of the guiding unit (3).

6. Belt conveyer according to one of Claims 1 to 5, **characterized in that** the driving unit (1) is equipped with a driving cylinder (4), which includes several telescopic shaft sections (41, 42, 43), which are expandable in the longitudinal direction of the conveyer, by which the outmost expandable shaft section (43) is connected with the guiding unit (3).

7. Belt conveyer according to one of Claims 1 to 5, **characterized in that** the guiding unit (3) is equipped with a driving cylinder (4), which includes several telescopic shaft sections (41, 42, 43), which are expandable in the longitudinal direction of the conveyer, by which the outmost expandable shaft section (43) is connected with the driving unit (1).

8. Belt conveyer according to one of Claims 1 to 5, **characterized in that** the driving unit (1) is equipped with a driving cylinder (4), which includes several telescopic shaft sections (41, 42, 43), which are expandable in the longitudinal direction of the conveyer and each of them is connected with one intermediate unit (2) or a guiding unit (3), so that the shortest expandable shaft section (41) is connected with the intermediate unit (2), which is placed adjacent to the driving unit (1), and the outmost expandable shaft section (43) is connected with the guiding unit (3).

9. Belt conveyer according to one of Claims 1 to 5, **characterized in that** the driving unit (1) is supported with a driving cylinder (4), which includes several telescopic shaft sections (41, 42, 43), which are expandable in the longitudinal direction of the conveyer, and is connected with the shortest expanded shaft section (41), while the other shaft sections (42) are successively attached to intermediate units (2) proportionally with respect to the length of expansion thereof, and the outmost expandable shaft section (43) is attached to the guiding unit (3) of the conveyer.

## Patentansprüche

1. Bandförderer, umfassend mindestens eine Antriebseinheit (1), welche mit einer Antriebsrolle (11) versehen ist, die durch ein Antriebsmittel (10) mit Energie versorgt wird, wobei die Antriebseinheit (1) an dem einen Endbereich des Bandförderers angeordnet ist, wobei der Bandförderer auch eine Führungseinheit (3) umfasst, welche am gegenüberliegenden Endbereich des Bandförderers angeordnet ist, wobei die Führungseinheit (3) mit einer Führungsrolle (31) versehen ist, die für das Führen und Spannen eines Förderbands angepasst ist, welches über und rings um die Rollen (11, 31) verläuft, wodurch die Antriebseinheit (1) zusammen mit der Führungseinheit (3) und gewünschtenfalls auch mit mindestens einer Zwischeneinheit (2) eine ausziehbare selbsttragende Konstruktion bildet, welche in ihrer Längsrichtung mittels eines Antriebszylinders (4) ausfahrbar bzw. zusammenschiebbar ist, welcher zumindest mit der Antriebseinheit (1) und mit der Führungseinheit (3) verbunden ist,
**dadurch gekennzeichnet, dass**
die Antriebseinheit (1) zwei seitliche Elemente (100', 100") umfasst, die jeweils aus einer gebogenen Platte bestehen, wobei die gebogene Platte eine längliche ausziehbare Führung (101', 101") im Wesentlichen in Form eines C-Profils sowie eine horizontale Führung (102', 102") zum Führen eines Förderbands und eine seitliche Führung (103', 103") zum Führen eines Förderbands umfasst,
und dass die Führungseinheit (3) zwei seitliche Elemente (300', 300") umfasst, die jeweils aus einer gebogenen Platte bestehen, wobei die gebogene Platte eine längliche ausziehbare Führung (301', 301") im Wesentlichen in Form eines C-Profils sowie eine horizontale Führung (302', 302") zum Führen eines Förderbands und eine seitliche Führung (303', 303") zum Führen eines Förderbands umfasst,
und dass jede Zwischeneinheit (2), welche gegebenenfalls zwischen der Antriebseinheit (1) und der Führungseinheit (3) enthalten ist, auch zwei seitliche Elemente (200', 200") umfasst, die jeweils aus einer gebogenen Platte bestehen, wobei die gebogene Platte eine längliche ausziehbare Führung (201', 201") im Wesentlichen in Form eines C-Profils sowie eine horizontale Führung (202', 202") zum Führen eines Förderbands und eine seitliche Führung (203', 203") zum Führen eines Förderbands umfasst,
wobei jede längliche ausziehbare Führung (301', 301") der Führungseinheit (3) entweder direkt oder indirekt über eine geeignete längliche ausziehbare Führung (201', 201") von mindestens einer Zwischeneinheit (2) in jede entsprechende längliche ausziehbare Führung (101', 101") der Antriebseinheit (1) eingesetzt ist oder umgekehrt,
und wobei jede horizontale Führung (302', 302") der Führungseinheit (3) entweder direkt oder über eine geeignete horizontale Führung (202', 202") von mindestens einer Zwischeneinheit (2) eine Verlängerung jeder entsprechenden horizontalen Führung (102', 102") der Antriebseinheit (1) bildet oder umgekehrt,
und wobei jede seitliche Führung (303', 303") der Führungseinheit (3) entweder direkt oder über eine geeignete seitliche Führung (203', 203") von mindestens einer Zwischeneinheit (2) eine Verlängerung jeder entsprechenden seitlichen Führung (103', 103") der Antriebseinheit (1) bildet oder umgekehrt.

2. Bandförderer nach Anspruch 1, **dadurch gekennzeichnet, dass** jede längliche ausziehbare Führung (301', 301") der Führungseinheit (3) direkt in jede entsprechende längliche ausziehbare Führung (101', 101") der Antriebseinheit (1) eingesetzt ist oder umgekehrt, wobei jede horizontale Führung (302', 302") der Führungseinheit (3) eine Verlängerung einer entsprechenden horizontalen Führung (102', 102") der Antriebseinheit (1) bildet oder umgekehrt und zugleich jede seitliche Führung (303', 303") der Führungseinheit (3) eine Verlängerung einer entsprechenden seitlichen Führung (103', 103") der Antriebseinheit (1) bildet oder umgekehrt.

3. Bandförderer nach Anspruch 1, **dadurch gekennzeichnet, dass** jede längliche ausziehbare Führung (301', 301") der Führungseinheit (3) in jede entsprechende längliche ausziehbare Führung (201', 201") der Zwischeneinheit (2) eingesetzt ist und jede längliche ausziehbare Führung (201', 201") der Zwischeneinheit (2) dann in jede entsprechende längliche ausziehbare Führung (101', 101") der Antriebseinheit (1) eingesetzt ist, wobei jede horizontale Führung (202', 202") der Zwischeneinheit (2) eine Verlängerung einer entsprechenden horizontalen Führung (102', 102") der Antriebseinheit (1) bildet und jede horizontale Führung (302', 302") der Führungseinheit (3) eine Verlängerung einer entsprechenden horizontalen Führung (202', 202") der Zwischeneinheit (2) bildet.

4. Bandförderer nach Anspruch 1, **dadurch gekennzeichnet, dass** die längliche ausziehbare Führung (201', 201") einer Zwischeneinheit (2) in jede entsprechende längliche ausziehbare Führung (301', 301") der Führungseinheit (3) eingesetzt ist und die längliche ausziehbare Führung (101', 101") der Antriebseinheit (1) dann in jede entsprechende längliche ausziehbare Führung (201', 201") der Zwischeneinheit (2) eingesetzt ist, wobei jede horizontale Führung (302', 302") der Führungseinheit (3) eine Verlängerung einer entsprechenden horizontalen Führung (202', 202") der Zwischeneinheit (2) bildet und jede horizontale Führung (102', 102") der Antriebseinheit (1) eine Verlängerung einer entsprechenden horizontalen Führung (202', 202") der Zwischeneinheit (2) bildet.

5. Bandförderer nach Anspruch 3 oder 4, **dadurch gekennzeichnet, dass** mindestens zwei Zwischeneinheiten (2) vorgesehen sind, wodurch jede längliche ausziehbare Führung (201', 201 ") jeder einzelnen Zwischeneinheit (2) in die längliche ausziehbare Führung (201', 201 ") jeder angrenzenden Zwischeneinheit (2) eingesetzt ist, welche dann in eine längliche ausziehbare Führung (101', 101") der Antriebseinheit (1) oder geeignetenfalls in eine längliche ausziehbare Führung (301', 301") der Führungseinheit (3) eingesetzt ist, wobei jede horizontale Führung (202', 202") jeder angrenzenden Zwischeneinheit (2) eine Verlängerung jeder entsprechenden horizontalen Führung (202', 202") jeder genannten Zwischeneinheit (2) bildet, welche dann eine Verlängerung jeder entsprechenden horizontalen Führung (102', 102") der Antriebseinheit (1) oder geeignetenfalls eine Verlängerung jeder entsprechenden horizontalen Führung (302', 302") der Führungseinheit (3) bildet.

6. Bandförderer nach einem der Ansprüche 1 bis 5, **dadurch gekennzeichnet, dass** die Antriebseinheit (1) mit einem Antriebszylinder (4) versehen ist, welcher mehrere ausziehbare Schaftabschnitte (41, 42, 43) umfasst, welche in der Längsrichtung des Förderers ausfahrbar sind, wodurch der äußerste ausfahrbare Schaftabschnitt (43) mit der Führungseinheit (3) verbunden ist.

7. Bandförderer nach einem der Ansprüche 1 bis 5, **dadurch gekennzeichnet, dass** die Führungseinheit (3) mit einem Antriebszylinder (4) versehen ist, welcher mehrere ausziehbare Schaftabschnitte (41, 42, 43) umfasst, welche in der Längsrichtung des Förderers ausfahrbar sind, wodurch der äußerste ausfahrbare Schaftabschnitt (43) mit der Antriebseinheit (1) verbunden ist.

8. Bandförderer nach einem der Ansprüche 1 bis 5, **dadurch gekennzeichnet, dass** die Antriebseinheit (1) mit einem Antriebszylinder (4) versehen ist, welcher mehrere ausziehbare Schaftabschnitte (41, 42, 43) umfasst, welche in der Längsrichtung des Förderers ausfahrbar sind und jeweils mit einer Zwischeneinheit (2) oder einer Führungseinheit (3) verbunden sind, so dass der kürzeste ausfahrbare Schaftabschnitt (41) mit der Zwischeneinheit (2), welche angrenzend an die Antriebseinheit (1) angeordnet ist, verbunden ist und der äußerste ausfahrbare Schaftabschnitt (43) mit der Führungseinheit (3) verbunden ist.

9. Bandförderer nach einem der Ansprüche 1 bis 5, **dadurch gekennzeichnet, dass** die Antriebseinheit (1) durch einem Antriebszylinder (4) getragen ist, welcher mehrere ausziehbare Schaftabschnitte (41, 42, 43) umfasst, welche in der Längsrichtung des Förderers ausfahrbar sind, und mit dem kürzesten ausgefahrenen Schaftabschnitt (41) verbunden ist, wohingegen die anderen Schaftabschnitte (42) hintereinander an Zwischeneinheiten (2) proportional in Bezug auf die Ausfahrlänge davon angebracht sind und der äußerste ausfahrbare Schaftabschnitt (43) an der Führungseinheit (3) des Förderers angebracht ist.

## Revendications

1. Convoyeur à bande, comprenant au moins une unité d'entraînement (1) qui est équipée d'un rouleau d'entraînement (11) actionné par un moyen d'entraînement (10) et ladite unité d'entraînement (1) étant disposée au niveau d'une zone d'extrémité du convoyeur à bande, ledit convoyeur à bande comprenant également une unité de guidage (3) qui est disposée sur la zone d'extrémité opposée du convoyeur à bande et ladite unité de guidage (3) est équipée d'un rouleau de guidage (31) adapté pour guider et tendre une bande transporteuse qui s'étend sur lesdits rouleaux (11, 31) et autour d'eux, ladite unité d'entraînement (1) formant, avec l'unité de guidage (3) et également avec au moins une unité intermédiaire (2) lorsque cela est souhaité, une construction autoportante télescopique qui peut être étendue ou rétractée dans sa direction longitudinale au moyen d'un cylindre d'entraînement (4) qui est connecté au moins à l'unité d'entraînement (1) et à l'unité de guidage (3),
**caractérisé en ce que**
l'unité d'entraînement (1) comprend deux éléments latéraux (100', 100") dont chacun est formé d'une plaque pliée, ladite plaque pliée incluant un guide télescopique longitudinal (101', 101") essentiellement en forme de profilé en C, ainsi qu'un guide horizontal (102', 102") pour guider une bande transporteuse et un guide latéral (103', 103") pour guider une bande transporteuse,
et que l'unité de guidage (3) comprend deux éléments latéraux (300', 300") dont chacun est formé d'une plaque pliée, ladite plaque pliée incluant un guide télescopique longitudinal (301', 301") essentiellement en forme de profilé en C, ainsi qu'un guide horizontal (302', 302") pour guider une bande transporteuse et un guide latéral (303', 303") pour guider une bande transporteuse, et que chaque unité intermédiaire (2), qui est incluse, facultativement, entre lesdites unité d'entraînement (1) et unité de guidage (3), comprend également deux éléments latéraux (200', 200") dont chacun est formé d'une plaque pliée, ladite plaque pliée incluant un guide télescopique longitudinal (201', 201") essentiellement en forme de profilé en C, ainsi qu'un guide horizontal (202', 202") pour guider une bande transporteuse et un guide latéral (203', 203") pour guider une bande transporteuse,
chaque guide télescopique longitudinal (301', 301") de l'unité de guidage (3) étant inséré, soit directement, soit indirectement par le biais d'un guide télescopique longitudinal approprié (201', 201") d'au moins une unité intermédiaire (2), dans chaque guide télescopique longitudinal correspondant (101', 101") de l'unité d'entraînement (1), ou inversement, et chaque guide horizontal (302', 302") de l'unité de guidage (3) formant, soit directement, soit par le biais d'un guide horizontal approprié (202', 202") d'au moins une unité intermédiaire (2), une extension de chaque guide horizontal correspondant (102', 102") de l'unité d'entraînement (1), ou inversement,
et chaque guide latéral (303', 303") de l'unité de guidage (3) formant, soit directement, soit par le biais d'un guide latéral approprié (203', 203") d'au moins une unité intermédiaire (2), une extension de chaque guide latéral correspondant (103', 103") de l'unité d'entraînement (1), ou inversement.

2. Convoyeur à bande selon la revendication 1, **caractérisé en ce que** chaque guide télescopique longitudinal (301', 301") de l'unité de guidage (3) est inséré directement dans chaque guide télescopique longitudinal correspondant (101', 101") de l'unité d'entraînement (1), ou inversement, chaque guide horizontal (302', 302") de l'unité de guidage (3) formant une extension d'un guide horizontal correspondant (102', 102") de l'unité d'entraînement (1), ou inversement, et, en même temps, chaque guide latéral (303', 303") de l'unité de guidage (3) formant une extension d'un guide latéral correspondant (103', 103") de l'unité d'entraînement (1), ou inversement.

3. Convoyeur à bande selon la revendication 1, **caractérisé en ce que** chaque guide télescopique longitudinal (301', 301") de l'unité de guidage (3) est inséré dans chaque guide télescopique longitudinal correspondant (201', 201") de l'unité intermédiaire (2) et chaque guide télescopique longitudinal (201', 201") de l'unité intermédiaire (2) est inséré ensuite dans chaque guide télescopique longitudinal correspondant (101', 101") de l'unité d'entraînement (1), chaque guide horizontal (202', 202") de l'unité intermédiaire (2) formant une extension d'un guide horizontal correspondant (102', 102") de l'unité d'entraînement (1) et chaque guide horizontal (302', 302") de l'unité de guidage (3) formant une extension d'un guide horizontal correspondant (202', 202") de ladite unité intermédiaire (2).

4. Convoyeur à bande selon la revendication 1, **caractérisé en ce que** le guide télescopique longitudinal (201', 201") d'une unité intermédiaire (2) est inséré dans chaque guide télescopique longitudinal correspondant (301', 301") de l'unité de guidage (3) et le guide télescopique longitudinal (101', 101") de l'unité d'entraînement (1) est inséré ensuite dans chaque guide télescopique longitudinal correspondant (201', 201") de l'unité intermédiaire (2), chaque guide horizontal (302', 302") de l'unité de guidage (3) formant une extension d'un guide horizontal correspondant (202', 202") de l'unité intermédiaire (2) et chaque guide horizontal (102', 102") de l'unité d'entraînement (1) formant une extension d'un guide horizontal correspondant (202', 202") de ladite unité intermédiaire (2).

5. Convoyeur à bande selon la revendication 3 ou 4, **caractérisé en ce que** l'on prévoit au moins deux unités intermédiaires (2), chaque guide télescopique longitudinal (201', 201") de chaque unité intermédiaire particulière (2) étant inséré dans le guide télescopique longitudinal (201', 201") de chaque unité intermédiaire adjacente (2) qui est ensuite inséré dans un guide télescopique longitudinal (101', 101") de l'unité d'entraînement (1) ou, le cas échéant, dans un guide télescopique longitudinal (301', 301") de l'unité de guidage (3), chaque guide horizontal (202', 202") de chaque unité intermédiaire adjacente (2) formant une extension de chaque guide horizontal correspondant (202', 202") de chaque unité intermédiaire observée (2), qui forme alors une extension de chaque guide horizontal correspondant (102', 102") de l'unité d'entraînement (1) ou, le cas échéant, une extension de chaque guide horizontal correspondant (302', 302") de l'unité de guidage (3).

6. Convoyeur à bande selon l'une des revendications 1 à 5, **caractérisé en ce que** l'unité d'entraînement (1) est équipée d'un cylindre d'entraînement (4) qui inclut plusieurs sections d'arbre télescopiques (41, 42, 43) qui sont extensibles dans la direction longitudinale du convoyeur, la section d'arbre extensible la plus extérieure (43) étant connectée à l'unité de guidage (3).

7. Convoyeur à bande selon l'une des revendications 1 à 5, **caractérisé en ce que** l'unité de guidage (3) est équipée d'un cylindre d'entraînement (4) qui inclut plusieurs sections d'arbre télescopiques (41, 42, 43) qui sont extensibles dans la direction longitudinale du convoyeur, la section d'arbre extensible la plus extérieure (43) étant connectée à l'unité d'entraînement (1).

8. Convoyeur à bande selon l'une des revendications 1 à 5, **caractérisé en ce que** l'unité d'entraînement (1) est équipée d'un cylindre d'entraînement (4) qui inclut plusieurs sections d'arbre télescopiques (41, 42, 43) qui sont extensibles dans la direction longitudinale du convoyeur et chacune d'elles est connectée à une unité intermédiaire (2) ou une unité de guidage (3) de manière à ce que la section d'arbre extensible la plus courte (41) soit connectée à l'unité intermédiaire (2) qui est placée de manière adjacente à l'unité d'entraînement (1) et que la section d'arbre extensible la plus extérieure (43) soit connectée à l'unité de guidage (3).

9. Convoyeur à bande selon l'une des revendications 1 à 5, **caractérisé en ce que** l'unité d'entraînement (1) est supportée par un cylindre d'entraînement (4) qui inclut plusieurs sections d'arbre télescopiques (41, 42, 43) qui sont extensibles dans la direction longitudinale du convoyeur et est connectée à la section d'arbre étendue la plus courte (41) tandis que les autres sections d'arbre (42) sont successivement reliées à des unités intermédiaires (2) de manière proportionnelle par rapport à leur longueur d'extension et la section d'arbre extensible la plus extérieure (43) est reliée à l'unité de guidage (3) du convoyeur.
